# EUROPEAN PATENT APPLICATION

(11) **EP 4 297 148 A1**
(43) Date of publication of application: **27.12.2023**
(21) Application number: 22883751.4
(22) Date of filing: 24.08.2022
(51) Int. Cl.: H01M 10/54, C22B 3/00, C22B 7/00, H01M 4/525, H01M 4/505, H01M 4/36, H01M 4/62, C01G 51/00

(54) **METHOD FOR REGENERATING POSITIVE ELECTRODE ACTIVE MATERIAL AND POSITIVE ELECTRODE ACTIVE MATERIAL REGENERATED THEREFROM**

(30) Priority: 21.10.2021 KR 20210141106
(71) Applicant: LG Energy Solution Ltd., 07335 Seoul (KR)
(72) Inventor: LEE, Jeongbae, Daejeon 34122 (KR); YANG, Doo Kyung, Daejeon 34122 (KR); KIM, Min Seo, Daejeon 34122 (KR); PARK, Se Ho, Daejeon 34122 (KR); SEONG, Eunkyu, Daejeon 34122 (KR); SEO, Yongsik, Daejeon 34122 (KR)
(74) Representative: Hoffmann Eitle
(86) International application number: PCT/KR2022/012618
(87) International publication number: WO 2023/068525

(57) **Abstract**

The present invention relates to a method of recycling a positive electrode active material and a recycled positive electrode active material prepared by the same. More particularly, the present invention relates to a method of recycling a positive electrode active material, the method including step A of recovering a positive electrode active material by heat-treating a waste positive electrode including a current collector and a positive electrode active material layer coated thereon at 300 to 650 °C in air; step B of washing the recovered positive electrode active material with water containing an ionic solid salt; and step C of adding a lithium precursor to the washed positive electrode active material and performing annealing at 400 to 1,000 °C in air and a recycled positive electrode active material prepared by the method.

According to the present invention, the present invention has an effect of providing a method of recycling a positive electrode active material, the method being capable of greatly improving the rate performance of a battery by completely removing a residual F component generated on the surface of a recycled positive electrode active material after a heat treatment step with water containing an ionic solid salt; being capable of achieving eco-friendliness by not using acids, and thus reducing process costs by eliminating the need for neutralization and wastewater treatment processes; being capable of preventing loss of metal elements by recycling a positive electrode active material in an intact state without decomposing the positive electrode active material; being capable of recovering a current collector without dissolving the current collector; being capable of preventing generation of toxic gases or explosion by not using organic solvents; and being suitable for mass production by using an easy-to-manage process such as heat treatment or precipitation and a recycled positive electrode active material having excellent electrochemical performance, resistance properties, and capacity properties prepared by the method.

## Description

### [Technical Field]

### [Cross-Reference to Related Application]

This application claims priority to Korean Patent Application No. 10-2021-0141106, filed on October 21, 2021, in the Korean Intellectual Property Office, the disclosure of which is incorporated herein by reference.

The present invention relates to a method of recycling a positive electrode active material and a recycled positive electrode active material prepared by the same. More particularly, the present invention relates to a method of recycling a positive electrode active material, the method being capable of greatly improving the rate performance of a battery by completely removing an F component generated on the surface of a recycled positive electrode active material in a heat treatment step with water containing an ionic solid salt and reducing loss of an F compound layer formed on an initial raw material; being capable of achieving eco-friendliness by not using acids, and thus reducing process costs by eliminating the need for neutralization and wastewater treatment processes; being capable of preventing loss of metal elements by recycling a positive electrode active material in an intact state without decomposing the positive electrode active material; being capable of recovering a current collector without dissolving the current collector; being capable of preventing generation of toxic gases or explosion by not using organic solvents; and being suitable for mass production by using an easy-to-manage process such as heat treatment or precipitation and a recycled positive electrode active material having excellent electrochemical performance, resistance properties, and capacity properties prepared by the method.

### [Background Art]

In general, a lithium secondary battery consists of a positive electrode formed by coating a metal foil such as aluminum with a positive electrode active material layer, a negative electrode formed by coating a metal foil such as copper with a negative electrode active material layer, a separator for preventing the positive and negative electrodes from mixing, an electrolyte located between the positive and negative electrodes to allow lithium ions to flow, and the like.

In the positive electrode active material layer, a lithium-based oxide is mainly used as an active material. In the negative electrode active material layer, a carbon material is mainly used as an active material. In general, the lithium-based oxide contains a rare metal such as cobalt, nickel, or manganese. Accordingly, studies on recovery and recycling of rare metals from the positive electrodes of lithium secondary batteries that are discarded after use or positive electrode scraps (hereinafter referred to as "waste positive electrodes") generated when manufacturing lithium secondary batteries are being actively conducted.

According to the related art for recovering rare metals from a waste positive electrode, after dissolving a waste positive electrode using hydrochloric acid, sulfuric acid, or nitric acid, cobalt, manganese, nickel, etc. are extracted using an organic solvent, and then the extracted metals are used as raw materials for synthesizing a positive electrode active material.

However, in the case of the method of extracting rare metals using an acid, a neutralization process and a wastewater treatment process are necessarily required due to the problem of environmental pollution, which greatly increases process costs. In addition, a process of recovering lithium, which is the main metal of a positive electrode active material, with high purity is not economical.

To solve these drawbacks, a method (direct recycling method) of directly recycling a positive electrode active material from a waste positive electrode without decomposing the positive electrode active material is being studied. As such a method, there are mainly four methods such as calcination, solvent dissolution, aluminum (Al) foil dissolution, and crushing & screening.

The calcination method is a simple process, but has disadvantages such as generation of foreign substances on the surface of a recycled positive electrode active material, which degrades the rate performance of a battery, generation of waste gas, and excessive energy consumption.

In addition, when using the solvent dissolution method, a recycled positive electrode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are generated on the surface of a recycled positive electrode active material, and there is a risk of explosion due to hydrogen gas generated in a process of removing aluminum foil.

In addition, the crushing & screening method may be performed through the simplest process among the above methods. However, it is difficult to completely separate a current collector and a positive electrode active material, the particle size distribution of the positive electrode active material is changed during a crushing process, and the battery characteristics of the recycled positive electrode active material are deteriorated due to a residual binder.

On the other hand, in a water-washing process used in the method (direct recycling method) of directly recycling a positive electrode active material from a waste positive electrode without decomposing the positive electrode active material, an excess of washing water is required, and there is a problem in that a functional coating layer such as an F compound layer formed on an initial positive electrode active material as a raw material is lost during washing. The functional coating layer is required for long-term lifespan characteristics and high voltage characteristics of the positive electrode active material.

Therefore, there is an urgent need to develop a method capable of safely recycling a positive electrode active material having improved rate performance in an environment-friendly manner at a low cost without loss of metal elements from a waste positive electrode and loss of a functional coating layer.

### [Disclosure]

### [Technical Problem]

Therefore, the present invention has been made in view of the above problems, and it is one object of the present invention to provide a method of recycling a positive electrode active material, the method being capable of greatly improving the rate performance of a battery by completely removing a residual F component generated on the surface of a recycled positive electrode active material in a heat treatment step with water containing an ionic solid salt and reducing loss of a functional coating layer, such as an F compound layer, formed on an initial raw material; being capable of achieving eco-friendliness by not using acids, and thus reducing process costs by eliminating the need for neutralization and wastewater treatment processes; being capable of preventing loss of metal elements by recycling a positive electrode active material in an intact state without decomposing the positive electrode active material; being capable of recovering a current collector without dissolving the current collector; being capable of preventing generation of toxic gases or explosion by not using organic solvents; and being suitable for mass production by using an easy-to-manage process such as heat treatment or precipitation.

It is another object of the present invention to provide a positive electrode active material having excellent electrochemical performance, resistance properties, and capacity properties.

The above and other objects can be accomplished by the present invention described below.

### [Technical Solution]

In accordance with one aspect of the present invention, provided is a method of recycling a positive electrode active material, the method including step A of recovering a positive electrode active material by heat-treating a waste positive electrode including a current collector and a positive electrode active material layer coated thereon at 300 to 650 °C in air; step B of washing the recovered positive electrode active material with water containing an ionic solid salt; and step C of adding a lithium precursor to the washed positive electrode active material and performing annealing at 400 to 1,000 °C in air.

The waste positive electrode of step A may be preferably a positive electrode separated from a discarded lithium secondary battery after use, a defective positive electrode sheet generated in a process of manufacturing a lithium secondary battery, or a positive electrode scrap generated when a positive electrode plate is obtained by punching a positive electrode sheet.

The positive electrode active material may include preferably one or more selected from the group consisting of a lithium cobalt oxide such as LiCoO₂; a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide.

The ionic solid salt may include preferably one or more selected from the group consisting of MgSO₄, Mg (NO₃)₂, and Ca(NO₃)₂.

A weight of the water containing an ionic solid salt used for the washing in step B may be preferably 1 to 40 times a weight of the recovered positive electrode active material.

In step B, the water containing an ionic solid salt may be preferably an aqueous solution obtained by dissolving an ionic solid salt in water or water in which a powdered ionic solid salt is dispersed.

In step B, the ionic solid salt may preferably react with LiF present on a surface of the positive electrode active material to form a complex compound.

The ionic solid salt of step B may be used at a concentration of preferably 0.5 to 2 mol based on 1 mol of LiF generated on the recovered positive electrode active material.

The ionic solid salt of step B may be used in an amount of preferably 1.5 to 5.5 parts by weight based on 100 parts by weight of the recovered positive electrode active material.

In step B, the washing may preferably include stirring the recovered positive electrode active material and the water containing an ionic solid salt.

Step B may preferably include a process of drying the washed positive electrode active material.

The lithium precursor of step C may include preferably one or more selected from the group consisting of LiOH, Li₂CO₃, LiNO₃, and Li₂O.

The lithium precursor of step C may be added preferably at least in the amount corresponding to a reduced molar ratio of lithium in the washed positive electrode active material based on a molar ratio of lithium in the positive electrode active material of step A.

In step C, the annealing temperature may be preferably a temperature exceeding a melting point of the lithium precursor.

The method of recycling a positive electrode active material may preferably include step D of coating the annealed positive electrode active material with a coating agent by mixing the annealed positive electrode active material and the coating agent and performing heat treatment at 100 to 1,200 °C.

In accordance with another aspect of the present invention, provided is a recycled positive electrode active material prepared by the method of recycling a positive electrode active material.

The surface of the recycled positive electrode active material may be preferably coated with a coating agent including a metal oxide or a metal salt containing carbon.

### [Advantageous effects]

According to the present invention, the present invention has an effect of providing a method of recycling a positive electrode active material, the method being capable of greatly improving rate performance by completely removing a residual F component generated on the surface of a recycled positive electrode active material in a heat treatment step with water containing an ionic solid salt and minimizing loss of a functional coating layer, such as an F compound layer, formed on an initial raw material; being capable of achieving eco-friendliness by not using acids, and thus reducing process costs by eliminating the need for neutralization and wastewater treatment processes; being capable of preventing loss of metal elements by recycling a positive electrode active material in an intact state without decomposing the positive electrode active material; being capable of recovering a current collector without dissolving the current collector; being capable of preventing generation of toxic gases or explosion by not using organic solvents; and being suitable for mass production by using an easy-to-manage process such as heat treatment or precipitation and a recycled positive electrode active material having excellent electrochemical performance, resistance properties, and capacity properties prepared by the method.

### [Description of Drawings]

The following drawings attached to the present specification illustrate embodiments of the present invention, and serve to further understand the technical spirit of the present invention together with the detailed description to be described later. Accordingly, the present invention should not be construed as being limited to the matters described in these drawings.
FIG. 1 illustrates positive electrode scraps discarded after cutting an electrode plate from a positive electrode sheet.
FIG. 2 is a graph showing rate performance depending on the number of cycles and shows cell evaluation results for a fresh positive electrode active material of Reference Example and a recycled positive electrode active material prepared in Comparative Example 1.
FIG. 3 is a graph showing rate performance depending on the number of cycles and shows cell evaluation results for recycled positive electrode active materials prepared in Comparative Examples 1 and 2.
FIG. 4 is a graph showing rate performance depending on the number of cycles and shows cell evaluation results for recycled positive electrode active materials prepared in Example 1 and Comparative Example 3.
FIG. 5 is a graph showing rate performance depending on the number of cycles and shows cell evaluation results for recycled positive electrode active materials prepared in Example 2 and Comparative Example 3.
FIG. 6 is a graph showing rate performance depending on the number of cycles and shows cell evaluation results for recycled positive electrode active materials prepared in Examples 1 and 3 and Comparative Example 3.
FIG. 7 is a graph showing rate performance depending on the number of cycles and shows cell evaluation results for recycled positive electrode active materials prepared in Examples 1 and 4 and Comparative Example 3.
FIG. 8 is a graph showing rate performance depending on the number of cycles and shows cell evaluation results for recycled positive electrode active materials prepared in Examples 1 and 5 and Comparative Example 3.
FIG. 9 is a flowchart for explaining a process of recycling a positive electrode active material according to an embodiment of the present invention.

### [Best mode]

The present inventors have studied a method (direct recycling method) of directly recycling a positive electrode active material from a waste positive electrode without decomposing the positive electrode active material. During the study, the present inventors confirmed that, when a positive electrode active material was recovered using a calcination method from positive electrode scraps generated in a process of manufacturing a lithium secondary battery, and then the recovered positive electrode active material was washed with water containing an ionic solid salt in a modification process, loss of a functional coating layer formed on an initial raw material was minimized, and the battery characteristics of the recycled positive electrode active material was improved. Based on these results, the present inventors conducted further studies to complete the present invention.

Hereinafter, a method of recycling a positive electrode active material and a recycled positive electrode active material prepared by the same according to the present invention will be described in detail.

The terms and words which are used in the present specification and the appended claims should not be construed as being confined to common meanings or dictionary meanings but should be construed as meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Method of recycling positive electrode active material

A method of recycling a positive electrode active material according to the present invention includes step A of recovering a positive electrode active material by heat-treating a waste positive electrode including a current collector and a positive electrode active material layer coated thereon at 300 to 650 °C in air; step B of washing the recovered positive electrode active material with water containing an ionic solid salt; and step C of adding a lithium precursor to the washed positive electrode active material and performing annealing at 400 to 1,000 °C in air. In this case, since a residual F component generated on the recycled positive electrode active material in the heat treatment is completely removed by water containing an ionic solid salt, the amount of wastewater may be significantly reduced. In addition, when the method of the present invention is used, the rate performance of a battery may be greatly improved, eco-friendliness may be achieved by not using acids, process costs may be reduced by eliminating the need for neutralization and wastewater treatment processes, loss of metal elements may be prevented by recycling a positive electrode active material in an intact state without decomposing the positive electrode active material, a current collector may be recovered without dissolving the current collector, and generation of toxic gases or explosion may be prevented by not using organic solvents. In addition, the method of the present invention may be suitable for mass production by using an easy-to-manage process such as heat treatment or precipitation.

### (A) Recovering positive electrode active material from waste positive electrode

Step A of recovering a positive electrode active material from a waste positive electrode according to the present invention may be preferably a step of recovering a positive electrode active material by heat-treating a waste positive electrode including a current collector and a positive electrode active material layer coated thereon at 300 to 650 °C in air. In this case, a binder, a conductive material, and a current collector may be completely removed by the simple process.

Preferably, the waste positive electrode may be a positive electrode separated from a discarded lithium secondary battery after use, a defective positive electrode sheet generated in a process of manufacturing a lithium secondary battery, or a positive electrode scrap, more preferably a positive electrode scrap generated when a positive electrode plate is obtained by punching a positive electrode sheet.

The positive electrode active material layer of step A may preferably include a positive electrode active material, a binder, and a conductive material.

The positive electrode active material may include preferably one or more selected from the group consisting of a lithium cobalt oxide such as LiCoO₂ (hereinafter referred to as "LCO"); a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide, more preferably a nickel manganese-based lithium composite metal oxide, an NCM-based lithium composite transition metal oxide, or a mixture thereof. In this case, reversible capacity and thermal stability may be excellent.

As a specific example, the positive electrode active material may be a compound represented by Chemical Formula 1 below.

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, and x+y+z+w=1.

For example, the conductive material may be a carbon-based conductive material, preferably carbon black, CNT, or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

The heat treatment temperature may be preferably 400 to 600 °C, more preferably 500 to 600 °C, still more preferably 530 to 580 °C. Within this range, since a current collector is not melted and only a binder is removed, a positive electrode active material may be easily separated from the current collector.

The heat treatment time may be preferably 10 minutes to 5 hours, more preferably 30 minutes to 5 hours, still more preferably 30 minutes to 2 hours, still more preferably 30 minutes to 1 hour. Within this range, since a current collector is not melted and only a binder is removed, a positive electrode active material may be easily separated from the current collector.

In the present disclosure, the heat treatment time is time of heat treatment performed at the heat treatment temperature, and does not include time required to reach the heat treatment temperature.

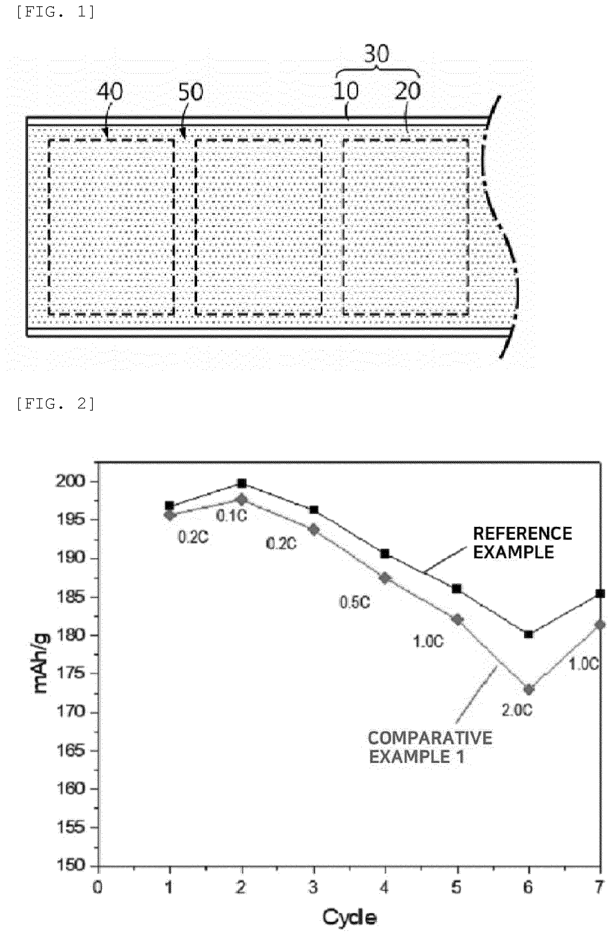

FIG. 1 below illustrates positive electrode scraps discarded after cutting a positive electrode plate from a positive electrode sheet.

Referring to FIG. 1, aluminum foil 10 as a long-sheet type positive electrode current collector is coated with a positive electrode active material layer 20 including a positive electrode active material, a conductive material, a binder, and the like to manufacture a positive electrode sheet 30. Then, the positive electrode sheet 30 is punched to a predetermined size to obtain a positive electrode plate 40. After punching, positive electrode scraps 50, which are the remaining parts of the sheet, are generated. Here, the punching is one means for cutting the positive electrode sheet.

In addition, the positive electrode active material layer 20 is formed when the aluminum foil 10 is coated with slurry containing a positive electrode active material, a conductive material, a binder, and a solvent. Since the slurry is very sensitive to environments such as temperature, it is difficult to set coating conditions. Accordingly, waste positive electrode sheets are generated until the positive electrode sheet 30 of desired quality is manufactured through a predetermined test.

Note that, in the following examples, positive electrode scraps are used as the waste positive electrode.

### (B) Washing positive electrode active material (surface modification)

Step B of washing the positive electrode active material according to the present invention may be preferably a step of washing the recovered positive electrode active material with water containing an ionic solid salt. In this case, a residual F component, especially LiF, formed on the surface of the recycled positive electrode active material in the heat treatment step, may be completely removed, and loss of a functional coating layer formed on an initial raw material may be minimized, thereby greatly improving the rate performance of a battery.

For example, the ionic solid salt may include one or more selected from the group consisting of MgSO₄, Mg(NO₃)₂, and Ca(NO₃)₂, preferably MgSO₄, Mg(NO₃)₂, or a mixture thereof, more preferably MgSO₄. In this case, a residual F component on the surface of the recycled positive electrode active material may be completely removed, and loss of a functional coating layer formed on an initial raw material may be minimized, thereby greatly improving the rate performance of a battery.

In the present disclosure, MgSO₄ may be preferably anhydrous MgSO₄, Mg(NO₃)₂ may be preferably Mg(NO₃)₂·6H₂O, and Ca(NO₃)₂ may be preferably Ca(NO₃)₂·4H₂O.

The ionic solid salt of step B may be used at a concentration of 0.5 to 2 mol, more preferably 0.5 to 1.5 mol, still more preferably 0.5 to 1 mol based on 1 mol of LiF generated on the recovered positive electrode active material. Within this range, due to appropriate reaction rate, the ionic solid salt effectively reacts with LiF on the surface of the positive electrode active material to form a complex compound, and as a result, LiF is removed. Thus, the rate performance of a battery may be greatly improved.

In the present disclosure, the content of LiF formed on the recovered positive electrode active material may be measured by ICP-OES analysis. Specifically, the content of LiF formed on the recovered positive electrode active material, a ratio of lithium to other metals in an active material, and a content (mg/kg) of a specific element such as F may be measured using an inductively coupled plasma optical emission spectroscophotometer (ICP-OES). In this case, a general ICP-OES analyzer frequently used in laboratories may be used. However, there is no deviation according to the measuring device or method.

Based on 100 parts by weight of the recovered positive electrode active material, the ionic solid salt of step B may be used in an amount of preferably 1.5 to 5.5 parts by weight, more preferably 2 to 5 parts by weight, still more preferably 2 to 4.5 parts by weight. Within this range, a residual F component on the surface of the recycled positive electrode active material may be effectively removed, thereby greatly improving the rate performance of a battery.

The weight of the water containing an ionic solid salt used for the washing in step B may be preferably 1 to 40 times, more preferably 10 to 35 times, still more preferably 25 to 32 times the weight of the recovered positive electrode active material. Within this range, a residual F component generated on the surface of the recycled positive electrode active material after the heat treatment step may be completely removed, and loss of a functional coating layer formed on an initial raw material may be minimized, thereby greatly improving the rate performance of a battery.

In step B, the water containing an ionic solid salt may be preferably an aqueous solution obtained by dissolving an ionic solid salt in water or water in which a powdered ionic solid salt is dispersed. In this case, a residual F component generated on the surface of the recycled positive electrode active material after the heat treatment step may be completely removed, and loss of a functional coating layer formed on an initial raw material may be minimized, thereby greatly improving the rate performance of a battery.

Preferably, the water in which a powdered ionic solid salt is dispersed may be obtained by adding a powdered ionic solid salt and the recovered positive electrode active material to water. In this case, time-saving effect may be obtained.

For example, the water may include one or more selected from the group consisting of tap water, deionized water (DIW), primary distilled water, secondary distilled water, and tertiary distilled water.

In step B, preferably, a complex compound may be formed on the surface of the positive electrode active material by the ionic solid salt. In this case, the rate performance of a battery may be greatly improved.

In step B, more preferably, after the heat treatment step, the ionic solid salt may react with residual LiF on the surface of the positive electrode active material to form a complex compound. In this case, LiF may be effectively removed, thereby greatly improving the rate performance of a battery.

For example, the complex compound may precipitate on the surface of the positive electrode active material or on solution.

As a specific example, when MgSO₄ is used as the ionic solid salt, MgSO₄ and LiF dissociate to form a complex compound (MgFₓ) through the reaction pathway shown in Chemical Formula 2 below.

[Chemical Formula 2] MgSO₄ + 2LiF = MgF₂ + Li₂SO₄

In step B, the washing may be preferably a step of stirring the recovered positive electrode active material and the water containing an ionic solid salt. In this case, the above step is a process of modifying the surface of the positive electrode active material, and, in this process, foreign substances such as LiF or metal fluorides formed on the surface of the positive electrode active material in the previous heat treatment process may be removed.

For example, the stirring may be performed at 300 to 700 rpm for 5 to 20 minutes, preferably at 400 to 600 rpm for 8 to 15 minutes. Within this range, all foreign substances such as LiF or metal fluorides formed on the surface of the positive electrode active material may be removed, but excessive elution of lithium may not occur. Thus, the capacity properties of a battery may be excellent.

In step B, the washing may be performed after the stirring or mixing. At this time, the weight of washing water may be preferably 5 to 15 times, 7 to 12 times the weight of the recovered positive electrode active material. In this case, the capacity properties of a battery may be improved.

The washing water may be preferably tertiary distilled water.

In step B, the washing may preferably include a process of collecting and drying a solid positive electrode active material by performing filtration or discarding a supernatant after the rinsing is finished. In this case, the process of adding a lithium precursor may be optimized.

For example, the filtration may be performed using filter paper having a pore size of preferably 0.1 to 0.7 pm, more preferably 0.2 to 0.4 µm. In this case, impurities may be easily removed.

The drying may be performed at preferably 70 to 200 °C, more preferably 20 to 130 °C until there is no further change in weight, for example, for 1 to 24 hours. Within this range, moisture contained in the washed positive electrode active material may be effectively removed.

### (C) Adding lithium precursor to positive electrode active material and performing annealing

Step C of adding the lithium precursor to the positive electrode active material and performing annealing according to the present invention may be preferably a step of adding the lithium precursor to the washed positive electrode active material and performing annealing at 400 to 1,000 °C in air. In this case, by improving crystallinity through increase in crystallinity or recovery of a crystal structure, the battery characteristics of the recycled positive electrode active material may be improved.

In step C, after adding the lithium precursor to the positive electrode active material, before annealing, the lithium precursor and the positive electrode active material may be sieved preferably 1 to 3 times, more preferably 2 times using a sieve having a mesh size of #325. In this case, the positive electrode active material and the lithium precursor may be mixed uniformly.

The lithium precursor of step C may include preferably one or more selected from the group consisting of LiOH, Li₂CO₃, LiNO₃, and Li₂O.

The lithium precursor of step C may be added preferably at least in an amount corresponding to a reduced molar ratio of lithium in the washed positive electrode active material based on a molar ratio of lithium in the positive electrode active material of step A, more preferably in an amount corresponding to a molar ratio of 0.0001 to 0.2 of lithium based on a molar ratio of lithium in the positive electrode active material of step A. Within this range, insufficient lithium in the recycled positive electrode active material may be supplemented, and thus crystallinity may be increased or a crystal structure may be recovered, thereby improving crystallinity. As a result, the battery characteristics of the recycled positive electrode active material may be improved.

The lithium precursor of step C may be added preferably in an amount capable of providing 0.1 to 40 mol% of lithium, more preferably in an amount capable of providing 1 to 15 mol% of lithium, still more preferably in an amount capable of providing 1 to 11 mol% of lithium based on 100 mol% in total of lithium in the positive electrode active material of step A. Within this range, since a residual precursor that causes an increase in the resistance of the recycled positive electrode active material is not left, battery characteristics may be improved.

The annealing temperature of step C may be adjusted within a limited range according to the melting point of the lithium precursor. For example, in the case of Li₂CO₃, the melting point thereof is 723 °C, and thus annealing may be performed at preferably 700 to 900 °C, more preferably 710 to 780 °C. In the case of LiOH, the melting point thereof is 462 °C, and thus annealing may be performed at preferably 400 to 800 °C, more preferably 550 to 800 °C, still more preferably 650 to 780 °C. Within this range, a crystal structure may be recovered, and thus the rate performance of a battery may be excellent.

The annealing temperature of step C is preferably a temperature exceeding the melting point of the lithium precursor. However, when the annealing temperature exceeds 1,000 °C, thermal decomposition of the positive electrode active material may occur, resulting in deterioration of battery performance.

### (D) Mixing with coating agent and performing coating by heat treatment

Step D of mixing with a coating agent and performing coating by heat treatment according to the present invention is an optional step, and may be preferably a step of mixing the annealed positive electrode active material of step C and a coating agent and performing coating by heating at 100 to 1,200 °C. In this case, structural stability and electrochemical performance may be improved while maintaining the intrinsic properties of the positive electrode active material.

For example, the coating agent may be a metal oxide or a metal salt containing carbon.

For example, the metal salt containing carbon may be a metal carbonate compound.

The metal oxide or the metal salt containing carbon may be preferably a metal oxide or carbon-containing metal salt including one or more selected from the group consisting of B, W, Al, Ti, Mg, Ni, Co, Mn, Si, Zr, Ge, Sn, Cr, Fe, V, and Y, more preferably a metal oxide or carbon-containing metal salt including one or more selected from the group consisting of B, W, Al, Ti, and Mg. In this case, metals other than lithium lost through a process of separating a current collector and a process of modifying the surface of a positive electrode active material may be replenished or a surface coating layer may be restored.

The heat treatment temperature may be preferably 100 to 1,000 °C, more preferably 200 to 1,000 °C, still more preferably 200 to 500 °C. Within this range, structural stability and electrochemical performance may be improved while maintaining the intrinsic properties of the positive electrode active material.

As a specific example, when the coating agent contains B, B-W, B-Ti, or B-W-Ti, heat treatment temperature is preferably 200 to 500 °C.

Based on 100 parts by weight in total of the positive electrode active material, the coating agent may be used in an amount of preferably 0.01 to 10 parts by weight, more preferably 0.1 to 1 part by weight. Within this range, structural stability and electrochemical performance may be improved while maintaining the intrinsic properties of the positive electrode active material.

The heat treatment time may be preferably 1 to 16 hours, more preferably 3 to 7 hours. Within this range, structural stability and electrochemical performance may be improved while maintaining the intrinsic properties of the positive electrode active material.

For example, the coating agent may have a spherical shape, a plate shape, a square shape, or a needle shape. For example, such a shape may be controlled by changing process conditions in the preparation process of the coating agent. The shape of the coating agent is not particularly limited as long as the shape follows a definition commonly accepted in the art to which the present invention pertains.

The coating agent may have preferably an average diameter of 1 to 1,000 nm and a specific surface area of 10 to 100 m²/g, more preferably an average diameter of 10 to 100 nm and a specific surface area of 20 to 100 m²/g. Within this range, the coating agent may be uniformly adhered to the surface of the positive electrode active material, thereby improving the structural stability of the positive electrode active material. Thus, reduction of the lifespan of the positive electrode active material and degradation of the electrochemical performance thereof due to lattice deformation or collapse of a crystal structure may be prevented.

In the present disclosure, the average diameter may be measured by a measuring method commonly used in the art to which the present invention pertains. For example, the average diameter may be measured by a laser diffraction method. Specifically, positive electrode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated from the amount of nitrogen gas adsorbed at a liquid nitrogen temperature (77 K) using BELSORP-mino II manufactured by BEL Japan Co.

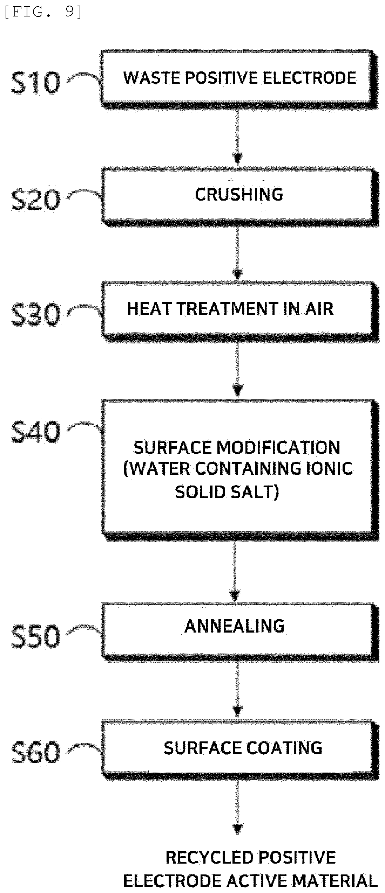

FIG. 9 below is a flowchart for explaining a process of recycling a positive electrode active material according to an embodiment of the present invention.

Referring to FIG. 9, first, positive electrode scraps are prepared (step S10) . For example, slurry is obtained by adding N-methyl pyrrolidone (NMP) to an LCO-based lithium composite transition metal oxide, carbon black, and polyvinylidene fluoride and mixing these components. Then, aluminum foil is coated with the slurry and dried in a vacuum oven at about 120 °C to manufacture a positive electrode sheet. Then, the positive electrode sheet is subjected to punching to obtain a positive electrode plate having a predetermined size. After punching, positive electrode scraps corresponding to the remaining part of the positive electrode sheet are obtained.

In the positive electrode scraps, a positive electrode active material layer is formed on aluminum foil. After a solvent is volatilized, the positive electrode active material layer has a structure in which a positive electrode active material and a conductive material are bonded by a binder. Accordingly, when the binder is removed, the positive electrode active material is separated from the aluminum foil.

Next, the obtained positive electrode scraps are crushed to an appropriate size (step S20). Here, the crushing includes cutting or shredding the positive electrode scraps to an easy-to-handle size. As a specific example, the crushed positive electrode scraps may have a size of 1 cm × 1 cm. For example, the crushing may be performed using various dry crushing equipment such as a hand-mill, a pin-mill, a disk-mill, a cutting-mill, and a hammer-mill. In addition, to increase productivity, the crushing may be performed using a high-speed cutter.

For example, in consideration of equipment used in handling positive electrode scraps and subsequent processes, whether to perform the crushing, the size of the scraps, etc. may be determined. For example, when equipment capable of continuous processing is used, since high fluidity is required, positive electrode scraps must be crushed into small scraps.

Next, the positive electrode scraps are heat-treated in air (step S30). Here, the heat treatment is performed to thermally decompose a binder in an active material layer.

Through the heat treatment in air, the binder and the conductive material in the active material layer are thermally decomposed into CO₂ and H₂O and removed. Since the binder is removed, the positive electrode active material may be separated from a current collector, and the separated positive electrode active material in powder form may be easily selected. Accordingly, in step S30, the active material layer may be separated from the current collector, and the positive electrode active material in the active material layer may be recovered in powder form.

The heat treatment should be performed in air. When the heat treatment is performed under a reducing gas or inert gas atmosphere, the binder and the conductive material are carbonized without being thermally decomposed. In this case, carbon components remain on the surface of the positive electrode active material, and the performance of a recycled positive electrode active material is deteriorated. However, when the heat treatment is performed in air, carbon components in the binder and the conductive material react with oxygen to generate gases such as CO and CO₂ and disappear. Thus, the binder and the conductive material may be completely removed.

The heat treatment is performed at preferably 300 to 650 °C, as a specific example, 550 °C. When the heat treatment is performed at a temperature of less than 300 °C, it is difficult to remove the binder, so the current collector may not be separated. When the heat treatment is performed at a temperature of exceeding 650 °C, since the current collector melts, the current collector may not be separated.

The heat treatment is performed at a temperature increasing rate of preferably 1 to 20 °C/min, more preferably 3 to 10 °C/min, as a specific example, 5 °C/min. Within this range, heat treatment may be performed without applying excessive force to heat treatment equipment, and application of thermal shock to positive electrode scraps may be prevented.

For example, the heat treatment may be performed for a time sufficient to thermally decompose the binder, preferably for 30 minutes or more, more preferably 30 minutes to 5 hours, as a specific example, within 30 minutes. Within this range, the binder may be sufficiently thermally decomposed, and thermal decomposition efficiency may be excellent.

The heat treatment may be performed using various types of furnaces, e.g., a box-type furnace. In addition, in consideration of productivity, the heat treatment may be performed using a rotary kiln capable of continuous treatment.

After the heat treatment, slow cooling or rapid cooling may be performed in the atmosphere.

Next, as a surface modification step, the recovered positive electrode active material is washed with water containing an ionic solid salt (step S40).

When washing is performed using the water containing an ionic solid salt, foreign substances generated on the surface of the positive electrode active material in the heat treatment step (step S30) may be effectively removed, resulting in no foreign substance on the surface of the recycled positive electrode active material. In addition, loss of a functional coating layer, such as an F compound layer, formed on an initial raw material may be minimized. The functional coating layer is applied to the initial raw material for long lifespan characteristics and high voltage characteristics.

When performing the washing, it is important to use water containing an ionic solid salt as the cleaning solution. When an aqueous sulfuric acid or hydrochloric acid solution is used, foreign substances such as fluorine (F) compounds present on the surface of the positive electrode active material may be removed. However, since transition metals such as Co and Mg present in the positive electrode active material are eluted, the performance of the recycled positive electrode active material may be deteriorated.

However, the water containing an ionic solid salt is safe and inexpensive, and may remove a trace amount of a binder that may remain after the thermal decomposition of step S30 without loss of other elements. In addition, the water containing an ionic solid salt does not elute transition metals present in the positive electrode active material. Accordingly, the use of the water containing an ionic solid salt is desirable.

The ionic solid salt may include one or more selected from the group consisting of MgSO₄, Mg(NO₃)₂, and Ca(NO₃)₂. In this case, foreign substances generated on the surface of the positive electrode active material in the heat treatment step may be effectively removed, and loss of the functional coating layer formed on the initial raw material may be minimized.

As a specific example, the water containing an ionic solid salt may be an aqueous solution obtained by dissolving an ionic solid salt in water or water in which a powdered ionic solid salt is dispersed.

The ionic solid salt may react with LiF generated on the surface of the positive electrode active material to form a complex compound. At this time, since the complex compound is precipitated on the surface of the positive electrode active material or in water containing an ionic solid salt, the complex compound may be easily removed.

As a specific example, based on 100 parts by weight of the recovered positive electrode active material, the ionic solid salt may be used in an amount of 1.5 to 5.5 parts by weight.

As a specific example, when the washing is performed, the weight of the water containing an ionic solid salt may be 1 to 40 times the weight of the positive electrode active material to be washed.

For example, the washing may be performed by stirring the recovered positive electrode active material and a cleaning solution. Here, the stirring may be mechanical stirring or ultrasonic stirring, without particular limitation.

As a specific example, the washing is performed by stirring at 300 to 700 rpm for 5 to 20 minutes. Within this range, decrease in the capacity of a battery due to excessive elution of lithium may be prevented.

In the present disclosure, the reason for washing the recovered positive electrode active material with the water containing an ionic solid salt is to remove LiF and metal fluorides as by-products of heat treatment that may exist on the surface of the recovered positive electrode active material, that is, to perform surface modification. During the heat treatment of step S30, the binder and the conductive material in the active material layer are converted to CO₂ and H₂O, and are vaporized and removed. In this process, CO₂ and H₂O may react with lithium on the surface of the positive electrode active material to form Li₂CO₃ and LiOH, and F present in the binder, such as PVdF, may react with lithium or other metal elements constituting the positive electrode active material to form LiF or metal fluorides. When LiF or the metal fluorides remain on the surface of the positive electrode active material, battery characteristics deteriorate when reused.

When stirring or mixing of the recovered positive electrode active material and the water containing an ionic solid salt is completed, the resulting positive electrode active material slurry is filtered or the supernatant of the slurry is discarded to obtain a solid positive electrode active material.

The obtained positive electrode active material is preferably dried. As a specific example, the positive electrode active material may be subjected to vacuum drying.

Next, a lithium precursor is added to the washed positive electrode active material, and annealing is performed (step S50).

Loss of lithium in the positive electrode active material occurs during preceding steps S30 and S40. In step S50, the loss amount of lithium is supplemented. In addition, during the preceding steps, a deformed structure (e.g., Co₃O₄ in the case of an LCO active material) may be formed on the surface of the positive electrode active material. In step S50, the crystal structure of the positive electrode active material may be recovered through annealing, thereby improving the properties of a recycled positive electrode active material, or restoring the properties of the recycled positive electrode active material to the level of properties of a fresh positive electrode active material. Here, "fresh" is a concept opposite to "recycling", a fresh material means that the material was made for the first time, and the fresh material is the same word as "raw material" used in the examples.

As a specific example, Li₂CO₃ is used as the lithium precursor.

Based on the molar ratio of lithium to other metals in a fresh positive electrode active material used in the positive electrode active material layer, the lithium precursor is preferably added in an amount corresponding to the lost lithium molar ratio. When an excess of lithium precursor is added relative to the amount of lithium lost, an unreacted lithium precursor may remain in a recycled positive electrode active material, which increases resistance. Accordingly, an appropriate amount of the lithium precursor needs to be added. For example, when the molar ratio of lithium to other metals in a fresh positive electrode active material is 1, the lithium precursor may be added in an amount such that lithium is in a molar ratio of 0.001 to 0.4, preferably an amount such that lithium is in a molar ratio of 0.01 to 0.2.

For example, the annealing may be performed in air at 400 to 1,000 °C, preferably at 600 to 900 °C. In this case, the temperature should be determined within a limited range according to the type of the lithium precursor.

The annealing temperature is preferably a temperature exceeding the melting point of the lithium precursor. However, since performance degradation occurs due to thermal decomposition of the positive electrode active material at a temperature exceeding 1,000 °C, the annealing temperature should not exceed 1,000 °C. When Li₂CO₃ is used as the lithium precursor, the annealing temperature is preferably 700 to 900 °C, more preferably 720 to 780°C, most preferably 740 to 760 °C. In addition, when Li₂CO₃ is used as the lithium precursor, the annealing temperature is preferably 700 to 900 °C, more preferably 720 to 780 °C, most preferably 740 to 760 °C.

For example, the annealing time is preferably 1 to 15 hours, more preferably 4 to 6 hours. When the annealing time is increased, a crystal structure may be sufficiently recovered, but even long-term annealing does not significantly affect performance. In this case, the same or similar equipment as in step S30 of performing heat treatment may be used as the annealing equipment.

The annealing step is safe and inexpensive, and restores the battery characteristics of the recycled positive electrode active material by restoring the crystal structure thereof, i.e., improving the crystallinity thereof.

The recycled positive electrode active material obtained through the steps of recycling a positive electrode active material described above has a particle size distribution similar that of a fresh positive electrode active material, and carbon components generated by carbonization of a binder or a conductive material do not remain on the surface of the recycled positive electrode active material. Thus, the recycled positive electrode active material may be used alone without additional treatment or mixed with a fresh active material to manufacture a positive electrode.

Next, as an optional step, the surface of the annealed positive electrode active material may be coated (S60).

For example, in the surface coating, a coating agent is mixed, and heat treatment is performed at 100 to 1,200 °C. When the heat treatment temperature is less than 100 °C, formation of a surface protection layer by the dissimilar metals may not occur. When the heat treatment temperature exceeds 1,200 °C, due to thermal decomposition of the positive electrode active material, battery performance may deteriorate.

For example, the coating agent may be a metal oxide or a metal salt containing carbon.

Specifically, when the positive electrode active material is mixed with a metal oxide such as B, W, and B-W and heat-treated, a lithium boron oxide layer may be formed on the surface of the active material, and this layer acts as a surface protection layer.

For reference, when the molar ratio of lithium to other metals in the positive electrode active material in the previous annealing step S50 is 1:1, lithium in the positive electrode active material reacts with the coating agent, and the molar ratio of lithium to other metal in the positive electrode active material is less than 1:1. In this case, the capacity of a battery may not be fully expressed. Accordingly, to replenish lithium depleted in step S50, lithium is added so that the molar ratio of lithium to other metals in the positive electrode active material is 1:1. In addition, an excess of lithium is added so that lithium is contained in a greater molar ratio of 0.0001 to 0.1 compared to other metals in the positive electrode active material. Then, in the surface coating of step S60, the molar ratio of lithium to other metals in the positive electrode active material becomes 1:1, and furthermore, a surface protective layer is formed.

Specifically, in step S50, lithium added in an excess amount of about 0.0001 to 0.1 molar ratio reacts with metal oxides such as B, W, and B-W in step S60. In this case, the molar ratio of lithium to other metals in the positive electrode active material does not decrease, showing a molar ratio of less than 1:1, so that no capacity degradation occurs.

### Recycled positive electrode active material

A recycled positive electrode active material of the present invention is prepared by the method of recycling a positive electrode active material described above. In this case, a residual F component generated on the surface of the recycled positive electrode active material after the heat treatment step may be completely removed with water containing an ionic solid salt, and loss of a functional coating layer formed on an initial raw material may be minimized, thereby greatly improving rate performance.

In addition, the recycled positive electrode active material of the present invention may include preferably one or more selected from the group consisting of a lithium cobalt oxide such as LCO; a lithium manganese oxide such as LiMnO₂ or LiMn₂O₄; a lithium iron phosphate compound such as LiFePO₄; a lithium nickel cobalt aluminum oxide (NCA); a lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. In this case, electrochemical performance, resistance properties, and capacity properties may be excellent.

As a more specific example, the recycled positive electrode active material includes a compound represented by Chemical Formula 1 below:

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, and x+y+z+w=1. The recycled positive electrode active material includes Al₂O₃ at a concentration of 1 to 10,000 ppm, and the surface thereof is coated with a coating agent containing metals or carbon. In this case, electrochemical performance, resistance properties, and capacity properties may be excellent.

The recycled positive electrode active material may be preferably coated with a coating agent containing metals or carbon. In this case, without change in the chemical and physical properties of the positive electrode active material, the structural stability of the positive electrode active material may be improved, thereby improving electrochemical properties such as rate performance, lifespan characteristics, and capacity. In addition, substitution with heterogeneous elements occurs on the surface of the positive electrode active material, so that the amount of residual lithium is reduced and the pH is reduced, thereby improving physicochemical properties.

Description of the recycled positive electrode active material of the present invention may include all of the description of the method of recycling a positive electrode active material described above, and thus repeated description is omitted in this specification.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

### Example 1

Positive electrode scraps (current collector: aluminum foil, positive electrode active material: lithium cobalt oxide) discarded after performing punching to obtain a positive electrode plate were crushed and heat-treated at 570 °C for 30 minutes in air to remove a binder and a conductive material. Then, a current collector and a positive electrode active material were separated, and then the positive electrode active material was recovered. At this time, temperature was increased to the heat treatment temperature at a temperature increasing rate of 5 °C/min. The content of LiF generated from the recovered positive electrode active material was measured by ICP-OES analysis. As a result, the content of LiF was 5,200 ppm.

To remove foreign substances such as LiF and metal fluorides on the surface of the recovered positive electrode active material, 15 g of the recovered positive electrode active material was mixed with 450 g (30 times weight of positive electrode active material) of water containing 0.3326 g of anhydrous MgSO₄ as an ionic solid salt, and stirring was performed at a stirring rate of 500 rpm for 10 minutes. Here, 0.3326 g of anhydrous MgSO₄ corresponded to 0.5 mol based on 1 mol of LiF present on the surface of the recovered positive electrode active material.

After stirring, rinsing was performed using 150 g (10 times weight of positive electrode active material) of deionized water (DIW). After rinsing, positive electrode active material slurry was filtered through a filter paper having a pore size of 0.3 µm to obtain a solid positive electrode active material. Then, the obtained positive electrode active material was subjected to vacuum drying.

Based on the molar ratio of lithium to other metals in a positive electrode active material as a raw material, Li₂CO₃ as a lithium precursor was added to the dried positive electrode active material so that the molar ratio of lithium was 0.02. Then, sieving was performed twice using a sieve having a mesh size of #325, and annealing was performed at 750 °C for 5 hours in air.

### Example 2

A recycled positive electrode active material was prepared in the same manner as in Example 1, except that the amount of anhydrous MgSO₄ as an ionic solid salt was changed from 0.3326 g to 0.6652 g. Here, 0.6652 g of anhydrous MgSO₄ as an ionic solid salt corresponded to 1 mol based on 1 mol of LiF present on the surface of the recovered positive electrode active material.

### Example 3

A recycled positive electrode active material was prepared in the same manner as in Example 1, except that 15 g of a recovered positive electrode active material and 0.3326 g of MgSO₄ as an ionic solid salt were added to 450 g (30 times weight of positive electrode active material) of water.

### Example 4

A recycled positive electrode active material was prepared in the same manner as in Example 1, except that, as an ionic solid salt, 0.7085 g of Mg(NO₃)₂·6H₂O was used instead of 0.3326 g of MgSO₄. Here, 0.7085 g of Mg(NO₃)₂·6H₂O corresponded to 0.5 mol based on 1 mol of LiF present on the surface of the recovered positive electrode active material.

### Example 5

A recycled positive electrode active material was prepared in the same manner as in Example 1, except that, as an ionic solid salt, 0.6525 g of Ca(NO₃)₂·4H₂O was used instead of 0.3326 g of MgSO₄. Here, 0.6525 g of Ca(NO₃)₂·4H₂O corresponded to 0.5 mol based on 1 mol of LiF present on the surface of the recovered positive electrode active material.

### Comparative Example 1

15 g of a fresh LCO active material (Ref.) having a fluorine (F) layer formed on the surface thereof and 450 g of distilled water were mixed, and washing was performed by vigorous stirring for 10 minutes. Then, filtration was performed under reduced pressure using a 3 µm filter paper. After washing, it was confirmed by ICP-OES analysis that 2 mol% of Li was lost compared to the fresh LCO active material (Ref.) The recovered filter cake was dried in a vacuum oven set to 100 °C, and then heat-treated at 750 °C for 5 hours under an air atmosphere to recover a positive electrode active material.

### Comparative Example 2

The same procedure as in Comparative Example 1 was performed, except that, before heat treatment at 750 °C, 0.02 mol of Li₂CO₃ corresponding to 2 mol% of Li lost by washing was added, solid-phase mixing was performed, and heat treatment was performed.

### Comparative Example 3

15 g of the positive electrode active material recovered in Example 1 and 450 g of distilled water were mixed, stirred vigorously, and then filtered under reduced pressure using a 3 µm filter paper. The recovered filter cake was dried in a vacuum oven set to 100 °C, and then heat-treated at 750 °C for 5 hours under an air atmosphere to recover a positive electrode active material.

### Reference Example

A fresh LCO active material (Ref.) having a fluorine layer formed on the surface thereof was used.

### [Test Examples]

The properties of the recycled positive electrode active materials obtained in Examples 1 to 5 and Comparative Examples 1 to 3 and the fresh positive electrode active material of Reference Example were measured according to the following methods, and the results are shown in Table 1 and FIGS. 2 to 8 below.

* ICP-OES analysis: The amount of LiF generated on a recovered positive electrode active material, a ratio of lithium to other metals in an active material, and a content (mg/kg) of a specific element such as F were measured using an inductively coupled plasma optical emission spectroscophotometer (ICP-OES). In this case, a general ICP-OES analyzer frequently used in laboratories may be used. However, there was no deviation according to the measuring device or method.

* Evaluation of cell: 96 % by weight of a recycled or fresh positive electrode active material, 2 % by weight of carbon black as a conductive material, and 2 % by weight of PVdF as a binder were prepared and mixed in an NMP to obtain slurry, and aluminum foil was coated with the slurry to manufacture a positive electrode. Then, a cell (coin half-cell, CHC) was manufactured. Then, electrochemical performance was evaluated at 25 °C and a voltage of 3 to 4.55V.

**[Table 1]**

| 1st cycle | Examples | | | | | Comparative Examples | | | Refer ence Examp le |
|---|---|---|---|---|---|---|---|---|---|
| | 1 | 2 | 3 | 4 | 5 | 1 | 2 | 3 | |
| Charge capacity (mAh/g) 0.2 C | 212.3 | 211.5 | 211.0 | 210.8 1 | 209.1 1 | 209.7 | 211.1 | 210.2 | 209.7 |
| Discharg e capacity (mAh/g) 0.2 C | 199.6 | 198.6 | 198.2 | 198.2 5 | 196.3 7 | 195.7 | 196.1 | 196.7 | 196.8 |
| Efficien cy (%) | 94.0 | 93.9 | 93.9 | 94.0 | 93.9 | 93.3 | 92.9 | 93.6 | 93.8 |

As shown in Table 1, compared to Comparative Examples 1 to 3 without the washing step according to the present invention, the recycled positive electrode active materials (Examples 1 to 5) according to the present invention have excellent charge/discharge capacity and efficiency. In addition, the recycled positive electrode active materials (Examples 1 to 5) have charge/discharge capacity and efficiency equal or superior to those of the fresh positive electrode active material (Reference Example).

FIG. 2 below shows cell evaluation results for the positive electrode active materials of Comparative Example 1 and Reference Example and is a graph showing rate performance depending on the number of cycles. In the graph, rate performance is shown through capacity evaluated according to the number of cycles at different currents. For reference, in the graph of FIG. 2, the horizontal axis is the number of cycles, and the vertical axis is capacity.

Referring to FIG. 2, compared to the positive electrode active material of Reference Example, the recycled positive electrode active material of Comparative Example 1 has poor rate performance in all cycles tested. These results may be due to loss of a surface coating layer and elution of Li upon washing. In addition, as a result of ICP-OES analysis of the recycled positive electrode active material of Comparative Example 1, it was confirmed that 2 mol% of Li was lost after washing.

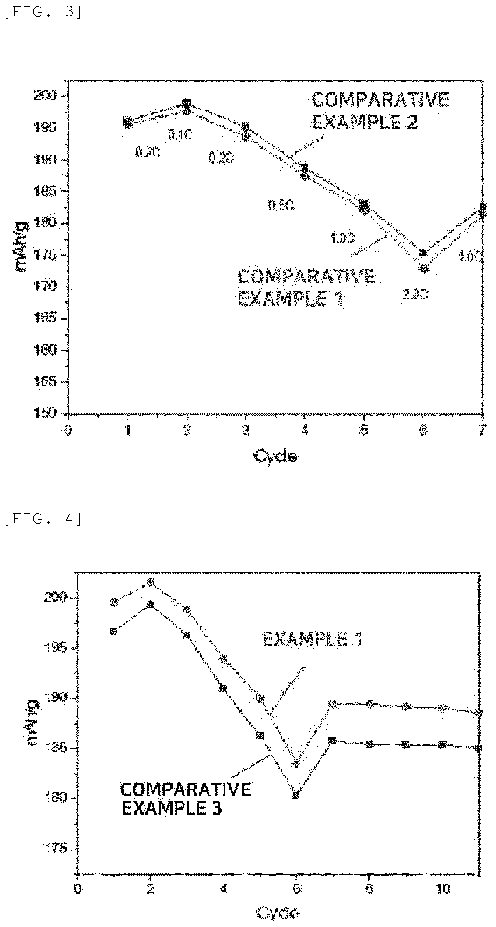

FIG. 3 below is a graph showing rate performance depending on the number of cycles and shows cell evaluation results for recycled positive electrode active materials prepared in Comparative Examples 1 and 2. In Comparative Example 2, when a positive electrode active material was prepared, an amount of Li₂CO₃ capable of replenishing the amount of Li lost during washing was added, solid-phase mixing was performed, and then calcination was performed.

Referring to FIG. 3, in the case of the recycled positive electrode active material of Comparative Example 2, compared to the recycled positive electrode active material of Comparative Example 1, it can be seen that capacity is partially recovered. However, it can be confirmed that the recycled positive electrode active material of Comparative Example 2 has a lower capacity than the positive electrode active material of Reference Example 1. This may be a result of a surface fluorine (F) layer lost during washing not being fully recovered.

FIG. 4 below is a graph showing rate performance depending on the number of cycles and shows cell evaluation results for recycled positive electrode active materials prepared in Example 1 and Comparative Example 3.

Referring to FIG. 4, compared to the positive electrode active material of Comparative Example 3, the recycled positive electrode active material of Example 1 exhibits improved rate performance in all cycles tested.

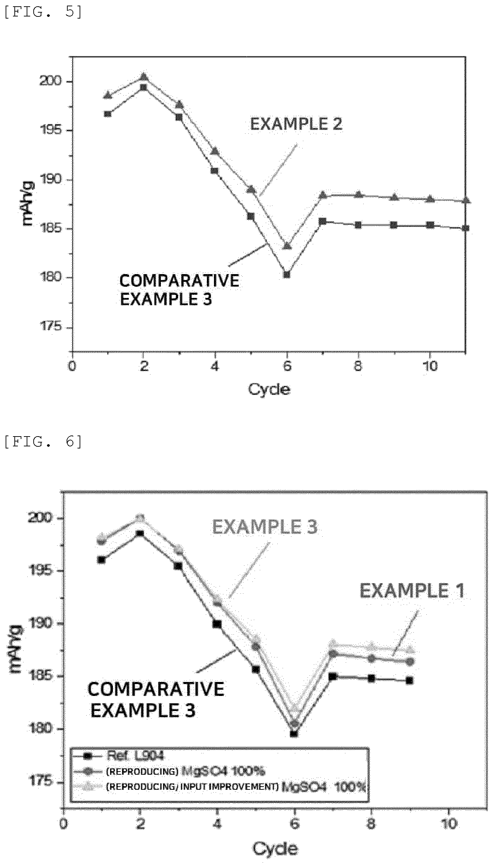

FIG. 5 below is a graph showing rate performance depending on the number of cycles and shows cell evaluation results for recycled positive electrode active materials prepared in Example 2 and Comparative Example 3.

Referring to FIG. 5, compared to the recycled positive electrode active material of Comparative Example 3, the recycled positive electrode active material of Example 2 exhibits improved rate performance in all cycles tested.

FIG. 6 below is a graph showing rate performance depending on the number of cycles and shows cell evaluation results for recycled positive electrode active materials prepared in Examples 1 and 3 and Comparative Example 3.

Referring to FIG. 6, compared to the recycled positive electrode active material of Comparative Example 3, the recycled positive electrode active materials of Examples 1 and 3 exhibit improved rate performance in all cycles tested. In addition, the recycled positive electrode active material of Example 3 and the recycled positive electrode active material of Example 1 exhibit similar or identical rate performance in all cycles tested. From these results, it can be seen that the method of dissolving MgSO₄ in water and the method of adding powdered MgSO₄ and a positive electrode active material in water obtain similar or identical results.

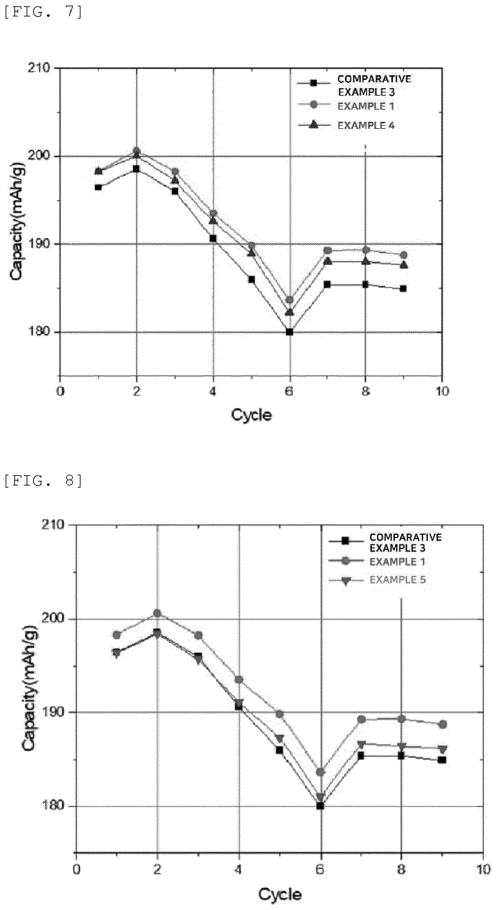

FIG. 7 below is a graph showing rate performance depending on the number of cycles and shows cell evaluation results for recycled positive electrode active materials prepared in Examples 1 and 4 and Comparative Example 3.

Referring to FIG. 7, the capacity of the recycled positive electrode active material of Example 4 is lower than that of the positive electrode active material of Example 1 by a difference of 1 mAh/g. However, compared to the recycled positive electrode active material of Comparative Example 3, the recycled positive electrode active materials of Examples 1 and 4 exhibit improved rate performance in all cycles tested.

FIG. 8 below is a graph showing rate performance depending on the number of cycles and shows cell evaluation results for recycled positive electrode active materials prepared in Examples 1 and 5 and Comparative Example 3.

Referring to FIG. 8, the capacity of the recycled positive electrode active material of Example 5 is slightly lower than that of the recycled positive electrode active material of Example 1. However, compared to the recycled positive electrode active material of Comparative Example 3, the recycled positive electrode active materials of Example 5 exhibits improved rate performance after 4 cycles.

### [Description of Symbols]

10: CURRENT COLLECTOR
20: ACTIVE MATERIAL LAYER
30: POSITIVE ELECTRODE SHEET
40: POSITIVE ELECTRODE PLATE
50: POSITIVE ELECTRODE SCRAPS

## Claims

1. A method of recycling a positive electrode active material, comprising:
step A of recovering a positive electrode active material by heat-treating a waste positive electrode comprising a current collector and a positive electrode active material layer coated thereon at 300 to 650 °C in air;
step B of washing the recovered positive electrode active material with water containing an ionic solid salt; and
step C of adding a lithium precursor to the washed positive electrode active material and performing annealing at 400 to 1,000 °C in air.

2. The method according to claim 1, wherein the waste positive electrode of step A is a positive electrode separated from a lithium secondary battery discarded after use, a defective positive electrode sheet generated in a process of manufacturing a lithium secondary battery, or a positive electrode scrap generated when a positive electrode plate is obtained by punching a positive electrode sheet.

3. The method according to claim 1, wherein the positive electrode active material layer comprises one or more selected from the group consisting of lithium cobalt oxide; lithium manganese oxide; a iron phosphate compound; lithium nickel cobalt aluminum oxide; lithium nickel oxide; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide.

4. The method according to claim 1, wherein the ionic solid salt comprises one or more selected from the group consisting of MgSO₄, Mg(NO₃)₂, and Ca(NO₃)₂.

5. The method according to claim 1, wherein a weight of the water containing an ionic solid salt used for the washing in step B is 1 to 40 times a weight of the recovered positive electrode active material.

6. The method according to claim 1, wherein, in step B, the water containing an ionic solid salt is an aqueous solution obtained by dissolving an ionic solid salt in water or a dispersed phase in which a powdered ionic solid salt is dispersed in water.

7. The method according to claim 1, wherein, in step B, a complex compound is formed on a surface of the positive electrode active material by the ionic solid salt.

8. The method according to claim 1, wherein the ionic solid salt of step B is used at a concentration of 0.5 to 2 mol based on 1 mol of LiF generated on the recovered positive electrode active material.

9. The method according to claim 1, wherein, in step B, the washing comprises stirring the recovered positive electrode active material and the water containing an ionic solid salt.

10. The method according to claim 1, wherein step B comprises a process of drying the washed positive electrode active material.

11. The method according to claim 1, wherein the lithium precursor of step C comprises one or more selected from the group consisting of LiOH, Li₂CO₃, LiNO₃, and Li₂O.

12. The method according to claim 1, wherein the lithium precursor of step C is added at least in the amount corresponding to a reduced molar ratio of lithium in the washed positive electrode active material based on a molar ratio of lithium in the positive electrode active material of step A.

13. The method according to claim 1, wherein, in step C, the annealing temperature is a temperature exceeding a melting point of the lithium precursor.

14. The method according to claim 1, comprising step D of coating the annealed positive electrode active material with a coating agent by mixing the annealed positive electrode active material and the coating agent and performing heat treatment at 100 to 1,200 °C.

15. A recycled positive electrode active material prepared by the method according to claims 1 to 14.

16. The recycled positive electrode active material according to claim 15, wherein a surface of the recycled positive electrode active material is coated with a coating agent comprising a metal oxide or a metal salt containing carbon.
